(19) **Europäisches Patentamt / European Patent Office / Office européen des brevets**

(11) **EP 4 546 727 A1**

(12) **EUROPEAN PATENT APPLICATION**
published in accordance with Art. 153(4) EPC

(43) Date of publication:
**30.04.2025 Bulletin 2025/18**

(21) Application number: 22947339.2

(22) Date of filing: **23.06.2022**

(51) International Patent Classification (IPC):
**H04L 27/00** (2006.01)

(52) Cooperative Patent Classification (CPC):
Y02D 30/70

(86) International application number:
**PCT/CN2022/100883**

(87) International publication number:
**WO 2023/245568 (28.12.2023 Gazette 2023/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Quectel Wireless Solutions Co., Ltd.**
**Shanghai 201601 (CN)**

(72) Inventors:
• ZHAO, Zheng
  Shanghai 201601 (CN)
• LYU, Ling
  Shanghai 201601 (CN)
• YANG, Zhongzhi
  Shanghai 201601 (CN)

(74) Representative: **Fish & Richardson P.C.**
**Highlight Business Towers**
**Mies-van-der-Rohe-Straße 8**
**80807 München (DE)**

(54) **WIRELESS COMMUNICATION METHODS AND APPARATUSES**

(57) The present disclosure provides a method and apparatus for wireless communication, which can save power consumption of a terminal device. The method includes: a terminal device executing a first operation based on first information from a central node. The first information includes information for determining a location of the central node if the first operation includes determining a location of the terminal device, and the first information includes one or more of synchronization information for synchronization between the central node and a network device, location information of the central node, beam information of the central node, and cell handover information of the central node if the first operation includes communicating with the network device.

FIG. 5

EP 4 546 727 A1

## Description

## TECHNICAL FIELD

The present disclosure relates to the field of communication technology, and more specifically to a method and apparatus for wireless communication.

## BACKGROUND

In order to improve communication performance of a terminal device, the terminal device may access a central node, and the central node can provide the network service for the terminal device. For example, the central node provides a wireless fidelity (WiFi) signal for the terminal device. In a communication system having the central node, how to save power consumption of the terminal device is an urgent problem to be solved.

## SUMMARY

In view of the above problem, the present disclosure provides a method and apparatus for wireless communication, which can save power consumption of a terminal device.

According to a first aspect, a method for wireless communication is provided, including: a terminal device executing a first operation based on first information from a central node, where the first information includes information for determining a location of the central node if the first operation includes determining a location of the terminal device, and the first information includes one or more of synchronization information for synchronization between the central node and a network device, location information of the central node, beam information of the central node, and cell handover information of the central node if the first operation includes communicating with the network device.

According to a second aspect, a method for wireless communication is provided, including: a central node transmit first information to a terminal device to enable the terminal device to execute a first operation, where the first information includes information for determining a location of the central node if the first operation includes determining a location of the terminal device, and the first information includes one or more of synchronization information for synchronization between the central node and a network device, location information of the central node, beam information of the central node, and cell handover information of the central node if the first operation includes communicating with the network device.

According to a third aspect, an apparatus for wireless communication is provided, where the apparatus is a terminal device and includes an execution unit configured to execute a first operation based on first information from a central node, and where the first information includes information for determining a location of the central node if the first operation includes determining a location of the terminal device, and the first information includes one or more of synchronization information for synchronization between the central node and a network device, location information of the central node, beam information of the central node, and cell handover information of the central node if the first operation includes communicating with the network device.

According to a fourth aspect, an apparatus for wireless communication is provided, where the apparatus is a central node and includes a transmitting unit configured to transmit first information to a terminal device to enable the terminal device to execute a first operation, where the first information includes information for determining a location of the central node if the first operation includes determining a location of the terminal device, and the first information includes one or more of synchronization information for synchronization between the central node and the network device, location information of the central node, beam information of the central node, and cell handover information of the central node if the first operation includes communicating with a network device.

According to a fifth aspect, an apparatus for wireless communication is provided, including a processor, a memory, and a communication interface, where the memory is configured to store one or more computer programs, and the processor is configured to invoke the one or more computer programs in the memory to cause the terminal device to perform the method according to the first aspect.

According to a sixth aspect, an apparatus for wireless communication is provided, including a processor, a memory, and a communication interface, where the memory is configured to store one or more computer programs, and the processor is configured to invoke the one or more computer programs in the memory to cause the terminal device to perform the method according to the second aspect.

According to a seventh aspect, an apparatus is provided, including a processor, where the processor is configured to invoke a program from a memory to perform the method according to the first aspect.

According to an eighth aspect, an apparatus is provided, including a processor, where the processor is configured to invoke a program from a memory to perform the method according to the second aspect.

According to a ninth aspect, a chip is provided, including a processor, where the processor is configured to invoke a program from a memory to cause a device installed with the chip to perform the method according to the first aspect.

According to a tenth aspect, a chip is provided, including a processor, where the processor is configured to invoke a program from a memory to cause a device installed with the chip to perform the method according to the second aspect.

According to an eleventh aspect, a computer-readable storage medium is provided, where the computer-readable storage medium stores a program, and the program causes a computer to perform the method according to the first aspect.

According to a twelfth aspect, a computer-readable storage medium is provided, where the computer-readable storage medium stores a program, and the program causes a computer to perform the method according to the second aspect.

According to a thirteenth aspect, a computer program product is provided, including a program, where the program causes a computer to perform the method according to the first aspect.

According to a fourteenth aspect, a computer program product is provided, including a program, where the program causes a computer to perform the method according to the second aspect.

According to a fifteenth aspect, a computer program is provided, where the computer program causes a computer to perform the method according to the first aspect.

According to a sixteenth aspect, a computer program is provided, where the computer program causes a computer to perform the method according to the second aspect.

Considering that if the terminal device is within the coverage of the central node and the distance between the terminal device and the central node is relatively close, some information of the central node is similar or identical to some information of the terminal device. Therefore, the terminal device in the embodiments of the present disclosure can directly utilize the first information of the central node to execute the first operation, thereby eliminating some detection or calculation operations, which is conducive to saving the power consumption of the terminal device and reducing the latency of the terminal device.

**BRIEF DESCRIPTION OF THE DRAWINGS**

FIG. 1 is an exemplary diagram of a system architecture applicable to a communication system in an embodiment of the present disclosure.

FIG. 2 is an exemplary diagram of a beamforming process.

FIG. 3 is an exemplary diagram of a CPE communication system.

FIG. 4 is a schematic diagram of a relative position relationship among a CPE, a terminal device, and a base station.

FIG. 5 is a schematic flowchart of a method for wireless communication according to an embodiment of the present disclosure.

FIG. 6 is a schematic diagram of determining a detection time of a downlink synchronization signal by a terminal device according to an embodiment of the present disclosure.

FIG. 7 is a schematic structural diagram of a terminal device according to an embodiment of the present disclosure.

FIG. 8 is a schematic structural diagram of a central node according to an embodiment of the present disclosure.

FIG. 9 is a schematic structural diagram of a communication device according to an embodiment of the present disclosure.

**DETAILED DESCRIPTION OF THE EMBODIMENTS**

The following describes the technical solutions in the present disclosure with reference to the accompanying drawings.

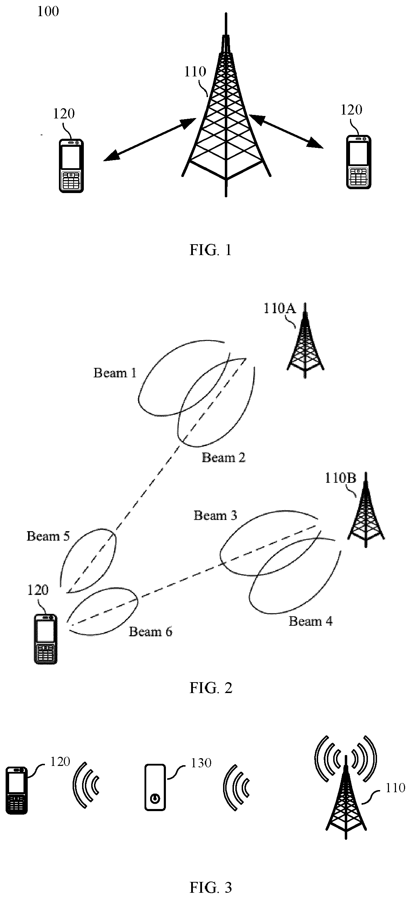

FIG. 1 is a wireless communication system 100 according to an embodiment of the present disclosure. The wireless communication system 100 includes a network device 110 and a terminal 120, and the network device 110 may be a device that communicates with the terminal 120. The network device 110 provides communication coverage for a particular geographic area and communicates with the terminal 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5th generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communicatio system, or the like.

The terminal in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal in the embodiments of the present disclosure may be a device that provides voice and/or data connectivity to a user, and may be used to connect a person, an object, and a machine, for example, a handheld device or a vehicle-mounted device having a wireless connection function. The terminal in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal, and the network device may also be referred to as an access network device or a radio access network device, for example, the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal may be deployed on land, including indoor or outdoor, handheld or vehicle-mounted, may be deployed on a water surface, and may also be deployed on an aircraft, a balloon, and a satellite in the air. A scenario in which the network device and the terminal are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

For ease of understanding, concepts involved in the embodiments of the present disclosure are first introduced below.

DOWNLINK SYNCHRONIZATION

After performing cell search or downlink out-of-synchronization, the terminal device needs to obtain downlink synchronization with the network device. In a downlink synchronization process, the terminal device may detect a downlink synchronization signal sent by the network device. Taking the NR system as an example, the downlink synchronization signal is a synchronization signal block (SSB), and the terminal device needs to detect the SSB. The downlink synchronization signal may include one or more of a primary synchronization signal (PSS), a secondary synchronization signal (SSS), a physical broadcast channel (PBCH), and a demodulation reference signal (DMRS) of the PBCH.

The network device transmits the PSS on a subframe specified by the protocol, so that the terminal device can determine the current subframe after the PSS is detected. Taking the LTE system as an example, the network device transmits the PSS on a subframe 1 and a subframe 6. After receiving the PSS, the terminal device can determine that the current subframe is subframe 1 or subframe 6, thereby completing the timing of 5 ms. The terminal device needs to perform a 5 ms time window detection in order to detect the PSS.

Since the network device transmits the SSS on the subframe 1 and a subframe 5, i.e., the SSS is located before the PSS in the time domain, the terminal device may search forward on the basis of the PSS, to complete detection of the SSS. The SSS consists of two pseudo-random sequences, with a first field and second field of the frame being opposite. Therefore, the terminal device can determine whether the SSS is in the first field or the second field of the frame after the SSS is detected, thereby completing the timing of 10 ms, i.e., a location of the radio frame can be determined, thus achieving frame synchronization. For example, assuming that a sequence value of the SSS transmitted on a subframe 0 is A and the sequence value of the SSS transmitted on the subframe 5 is B, the terminal device may determine that the current subframe is the subframe 5 instead of the subframe 0 if B is detected.

Physical cell identities (PCI, or referred to as PCID) may be used to distinguish different cells. The terminal device may determine the PCI of the cell based on the detected PSS and SSS. The equation for calculating the PCI of the cell may be as follows:

$$\text{PCI} = 3 * N_{ID}^{(1)} + N_{ID}^{(2)} \text{ (Equation 1)}$$

In the above equation, $N_{ID}^{(2)}$ represents the PSS sequence, and $N_{ID}^{(1)}$ represents the SSS sequence. A value of $N_{ID}^{(2)}$ is in a range of 0 to 2, and a value of $N_{ID}^{(1)}$ is in a range of 0 to 167.

It is learned from the above that there are various values of the PSS sequence and the SSS sequence, and the terminal device needs to traverse all PSS sequences and SSS sequences to complete the cell search. Taking the PSS sequence as an example, three values of the PSS sequence are provided, which are 0, 1 and 2 respectively, and the terminal device needs to traverse the PSS sequences when detecting the PSS, i.e., the above three PSS sequences need to be traversed.

In an initial stage of the cell search, the terminal device needs to detect and determine which group of PSS is sent by the network device. The terminal device may respectively perform sliding correlation with the received PSS sequence by using three groups of local PSS sequences. When an obvious peak value is detected, the terminal device determines that the PSS is detected and determines which PSS sequence the PSS sequence sent by the network device is. After all the PSS sequences and the SSS sequences are traversed, the terminal device may determine an accessed cell based on the detected signal peak, and complete downlink synchronization with the cell.

The terminal device detects the DMRS, performs channel measurement and channel estimation on the DMRS, demodulates the PBCH, and obtains a master information block (MIB) carried on the PBCH, to complete frame synchronization, or field synchronization, or slot synchronization.

UPLINK SYNCHRONIZATION

After performing cell search or uplink out-of-synchronization, the terminal device needs to obtain uplink synchronization with the network device. The terminal device may implement uplink synchronization in a random access manner. The purpose of uplink synchronization is to obtain time advance (TA). In the random access process, the network device may know, based on a random access channel (RACH) resource used by the terminal device to transmit a preamble, a time when the terminal device transmits the preamble, so as to determine an initial TA of the terminal device based on a transmitting time and a receiving time of the preamble, and notify the terminal device via a random access response (RAR).

The manner of the random access is not specifically limited in the embodiments of the present disclosure. For example, the random access may be contention-based random access or non-contention-based random access.

BEAMFORMING SYSTEM

The terminal device of some communication systems (e.g., an NR system) has a beamforming system, so that a beamforming function can be implemented. During downlink reception, the beamforming system may be configured to receive a downlink signal. For example, in the downlink reception process, the terminal device scans receive beams via the beamforming system and receives beams in different directions (or different orientations). Then, the terminal device may select, based on information such as signal strength of each receive beam, the best beam for reception of the downlink signal. Taking FIG. 2 as an example, a terminal device 120 receives a downlink beam (e.g., a beam 1 and a beam 2 in FIG. 2) of a base station 110A, and receives a downlink beam (e.g., a beam 3 and a beam 4 in FIG. 2) of the base station 110B. After comparing each beam signal through the beamforming system, the terminal device 120 finally selects a beam 5 to receive a downlink signal of the base station 110A and selects a beam 6 to receive a downlink signal of the base station 110B.

In the beam scanning process, the terminal device needs to use different beams to respectively receive beams sent by the base station. Still taking FIG. 2 as an example, the terminal device has the beam 5 and the beam 6, and transmit beams of the base station 110A includes the beam 1 and the beam 2, so that the terminal device needs to use the beam 5 to respectively receive the beam 1 and the beam 2, and to use the beam 6 to respectively receive the beam 1 and the beam 2, thereby completing the beam scanning. In other words, if the terminal device has two receive beams and the base station has two transmit beams, the number of beam scanning operations required by the terminal device is 4.

CELL HANDOVER

Cell handover (HO) aims to improve continuity of service provided by the communication system for the terminal device. In a wireless communication system, when the terminal device moves from a cell (also referred to as a "source cell") to another cell, the terminal device needs to hand over to another cell (also referred to as a "target cell") in order to maintain communication. The cell may be a primary cell (PCell) or a primary secondary cell (PSCell).

In the cell handover process, the terminal device may perform radio resource management (RRM) measurement and perform cell reselection based on an RRM measurement result. After completing the RRM measurement, the terminal device may report the measurement result to the network device. The network device may control the terminal device to perform the cell handover based on the RRM measurement result.

When performing the RRM measurement, the terminal device may perform the RRM measurement on a plurality of cells (e.g., a serving cell and at least one neighboring cell) to obtain signal measurement results of the plurality of cells. The signal measurement results of the plurality of cells may be used to perform cell reselection or cell handover. For example, when cell reselection is performed, the terminal device may select a cell with a good signal quality for access. For another example, when cell handover is performed, the terminal device may hand over from the serving cell to a target cell with a better signal quality.

When accessing the target cell, the terminal device may complete access of the target cell according to the uplink and downlink synchronization process described above. For example, the terminal device may detect a downlink synchronization signal (e.g., one or more of PSS, SSS, DMRS, and PBCH) sent by the target cell, to complete downlink synchronization with the target cell.

In order to improve the communication performance of the terminal device, the terminal device may access a central node, and the central node provides the network service for the terminal device. For example, the central node may provide a WiFi signal for the terminal device. The terminal device may communicate with the network device using WiFi. Certainly, in some embodiments, the central node may also provide a wired network service for the terminal device. The central node in the embodiments of the present disclosure may be a customer premise equipment (CPE), a WiFi base station, a road side unit (RSU) in a sidelink communication system, a central node in a sidelink communication system, and the like.

The WiFi base station in the embodiments of the present disclosure may provide a WiFi signal for the terminal device. The WiFi base station may have the capability of performing uplink synchronization and/or downlink synchronization with the network device. The downlink synchronization capability may include obtaining a cell ID or a PCI/PCID of the accessed cell, or obtaining a cell ID or a PCI/PCID of a cell with the maximum receiving power, or obtaining cell IDs or PCI/PCIDs of the plurality of cells with the optimal receiving power. The uplink synchronization capability may include obtaining the TA transmitted by the base station.

The RSU and/or the central node in the sidelink communication system are responsible for uploading and transmitting management/signaling of the communication network in the cell. The RSU may transmit data such as traffic lights, traffic signs, and obstacles on the road to the vehicle. The central node may refer to a terminal in the vehicle.

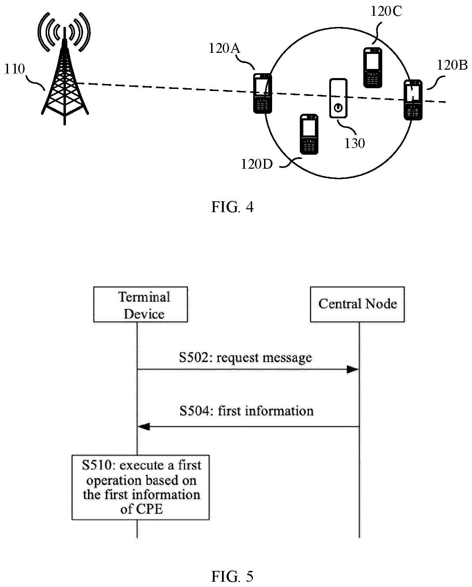

The following describes the CPE system in the embodiments of the present disclosure with reference to FIG. 3 and FIG. 4.

CPE SYSTEM

CPE is a mobile signal access device that receives mobile signals from the network side and forwards them as wireless WiFi signals, and the CPE may convert high-speed 4G or 5G signals from the network side into WiFi signals to communicate with the terminal, i.e., the connection between the terminal and the network side is achieved through WiFi signals. CPE can be widely used in rural areas, towns, hospitals, offices, factories, cells, and other wireless network access scenarios, saving the cost of laying wired networks.

The CPE may perform secondary relay on operator network signals. As shown in FIG. 3, the CPE 130 may receive a mobile signal transmitted by the base station 110 and convert the mobile signal into a WiFi signal. For the network device, the CPE is a terminal device, and the CPE may be inserted into a subscriber identity module (SIM) card. Due to the stronger antenna gain and higher power, the CPE has a stronger signal transceiving capability compared to the terminal device. Thus, in some areas where some terminal devices may have no signal, the CPE may still have signals. In addition, the CPE may be used as a mobile relay to ensure that the terminal device has a better connection during movement.

The terminal device in the embodiments of the present disclosure is within both the coverage of the base station and the coverage of the CPE. There may be various relative positional relationships among the CPE 130, the terminal device 120, and the base station 110, which are not specifically limited in the embodiments of the present disclosure. For example, the terminal device may be located on a connection line between the CPE and the base station, such as the terminal device 120A in FIG. 4. For another example, the terminal device may be located on an extension line of the connection line between the CPE and the base station, such as the terminal device 120B in FIG. 4. The terminal device (or the terminal device 120B), the CPE, and the base station are located on a straight line. For another example, the terminal device, the CPE, and the base station form a triangle, such as the terminal device 120C and 120D in FIG. 4.

The terminal device within the coverage of the CPE may access the network based on the WiFi signal transmitted by the CPE, so as to communicate with another device. In the current CPE system, the CPE is a terminal from the perspective of the network device. However, for the terminal device within the coverage of the CPE, the CPE acts as the WiFi base station. From the perspective of wireless communication, both the CPE and the terminal device are terminals, and both independently communicate with the network device, such as performing downlink synchronization, reading broadcast information, uplink random access, paging, etc.

In a communication system having a central node, how to save power consumption of a terminal device is an urgent problem to be solved at present.

Taking synchronization with the network device as an example, the terminal device is within the coverage of the central node, and the central node provides a WiFi connection for the terminal device. Although the mobile data of the terminal device is turned off, the voice service of the terminal device is still turned on. Therefore, the terminal device still needs to stay synchronized with the network device, so as to receive paging information to complete a voice call. When performing synchronization, the terminal device needs to consume a relatively large power, which is not conducive to saving power consumption of the terminal device.

Based on this, an embodiment of the present disclosure provides a method for wireless communication. Considering that if the terminal device is within the coverage of the central node and the distance between the terminal device and the central node is relatively close, some information of the central node is similar or consistent with some information of the terminal device. Therefore, the terminal device in the embodiments of the present disclosure may directly use the information of the central node to execute operations, thereby eliminating some detection or computation operations, which is conducive to saving the power consumption of the terminal device and reducing the delay of the terminal device.

The following describes the solutions of the embodiments of the present disclosure in detail with reference to FIG. 5.

Referring to FIG. 5, at operation S510, the terminal device executes a first operation based on first information from the central node. The first information is associated with the central node. The central node is a device accessed by the terminal device, or the central node is a device connected to the terminal device, or the terminal device is located within the coverage of the central node.

The central node may be one or more of a CPE, a WiFi base station, a road side unit in a sidelink communication system, and a central node in the sidelink communication system.

The WiFi base station in the embodiments of the present disclosure is able to provide a WiFi signal for the terminal device. The WiFi base station may have a capability of performing uplink synchronization and/or downlink synchronization with the network device. The downlink synchronization capability may include obtaining a cell **ID** or a PCI/PCID of an accessed cell, or obtaining a cell **ID** or a PCI/PCID of a cell with the maximum receiving power, or obtaining cell IDs or PCI/PCIDs of a plurality of cells with the optimal receiving power. The uplink synchronization capability may include obtaining the TA transmitted by the base station.

The RSU and/or the central node in the sidelink communication system are responsible for uploading and transmitting management/signaling of the communication network in the cell. The RSU may transmit data such as traffic lights, traffic signs, and obstacles on the road to the vehicle. The central node may refer to a terminal in the vehicle.

The CPE may refer to a mobile signal access device capable of receiving mobile signals from the network side and forwarding them as wireless Wi-Fi signals. The CPE may convert a high-speed mobile signal (such as a 4G signal, a 5G signal, or a 6G signal) from the network side into a WiFi signal to communicate with the terminal, i.e., the connection between the terminal and the network side is achieved through the WiFi signal.

The first information may be transmitted by the central node to the terminal device. Referring to FIG. 5, the method shown in FIG. 5 may further include operation S504, i.e., the center node transmitting the first information to the terminal device.

The first information transmitted by the central node may be actively transmitted by the central node, or may be transmitted at a request of the terminal device. With continued reference to FIG. 5, the method shown in FIG. 5 may further include operation S502, i.e., the terminal device transmits a request message to the central node. After receiving the request message, the central node transmits the first information to the terminal device.

The way for the central node to transmit the first information to the terminal device is not specifically limited in the embodiments of the present disclosure. As an example, since there is a WiFi connection between the central node and the terminal device, the central node may transmit the first information to the terminal device through a WiFi signal. As another example, the central node may transmit the first information to the terminal device through a D2D communication link. For example, the central node may establish a D2D connection with the terminal device before transmitting the first information to the terminal device. Furthermore, the central node may transmit the first information to the terminal device through the D2D communication link. In some embodiments, the first operation includes determining a location of the terminal device, i.e., locating the terminal device. The terminal device may determine location information of the terminal device based on the first information. Since the distance between the central node and the terminal is relatively close, a location of the central node may serve as a reference for the location of the terminal. Some central nodes have relatively low mobility and strong power supply capabilities with respect to the terminal, allowing for a longer duration of location estimation, thus obtaining more accurate location estimation.

If the first operation includes determining the location of the terminal device, the first information may include location information for determining the location of the central node. The location information for determining the location of the central node may include one or more of location information of the central node and the TA of the central node.

The terminal device or the central node may determine location information of the terminal device based on the location information of the central node. For example, the terminal device may use the location of the central node as its own location. For another example, the terminal device may determine the location information of the terminal device based on the location information of the central node and the distance and direction between the terminal device and the central node. Alternatively, the terminal device may determine the location information of the terminal device based on the location information of the central node relative to the base station and the distance and direction between the terminal device and the central node. The distance between the central node and the terminal device may be obtained by the terminal device through measuring the WiFi signal transmitted by the central node. In some embodiments, the terminal device may measure the distance and direction based on a signal transmitted by the central node, to obtain the distance between the terminal device and the central node, as well as an orientation of the terminal device relative to the central node. Since the distance between the terminal and the central node is relatively close, the link quality between the central node and the terminal is higher than the link quality between the base station and the terminal, and precision of the location estimation of the terminal relative to the central node is higher than precision of the location estimation of the terminal relative to the base station. When the precision of the location estimation of the central node relative to the base station is higher, the precision of the location information of the terminal device determined through the location information of the central node and the distance and direction between the terminal device and the central node are higher. Some central nodes have relatively low mobility and stronger power supply capabilities with respect to the terminal, allowing for a longer duration of location estimation, thus obtaining more accurate location estimation.

The terminal device may determine the location information of the terminal device based on the TA of the central node. Specifically, the terminal device may determine a distance between the central node and the network device based on the TA of the central node. Since the distance between the terminal and the central node is relatively close, the terminal may use the TA of the central node as a distance estimation between the terminal and the base station, so that complex location calculation is not required to obtain location information. Further, the terminal device may determine the location information of the terminal device based on the distance between the central node and the network device and the distance between the central node and the terminal device.

Certainly, in some embodiments, the central node may also transmit the location information of the network device to the terminal device, to assist the terminal device in determining location information of the terminal device.

Certainly, the locating of the terminal device may be implemented by the network device. The terminal device may transmit the TA information of the central node and/or information such as the distance between the terminal device and the central node to the network device, and the network device may determine the location information of the terminal device based on the TA information of the central node and/or the distance between the terminal device and the central node. The network device may be a base station or may be a location server.

In some embodiments, the central node may notify the network device of the terminal device within the coverage of the central node, so that the network device determines the location of the terminal device. For example, the network device may use the location of the central node as the location of the terminal device within the coverage of the central node.

In some embodiments, the first operation may include communicating with the network device, in other words, the terminal device may communicate with the network device based on the first information of the central node.

If the first operation includes communicating with the network device, the first information may include one or more of synchronization information for synchronization between the central node and the network device, location information of the central node, beam information of the central node, and cell handover information of the central node. The first information is respectively described below.

The first information may include synchronization information for synchronization between the central node and the network device. The synchronization information for synchronization between the central node and the network device may include any information required by the central node in a process of synchronizing with the network device. For ease of description, the synchronization information for synchronization between the central node and the network device is referred to as synchronization information of the central node for short. Because the terminal device is within the coverage of the central node, synchronization information (or a synchronization parameter) of the terminal device is similar to the synchronization information of the central node. Therefore, the terminal device may use the synchronization information of the central node to assist in the synchronization, or the terminal device directly uses the synchronization information of the central node to perform the synchronization, so as to save power consumption.

If the first information includes the synchronization information of the central node, the first operation may include synchronizing with the network device. That is, the terminal device may synchronize with the network device based on the synchronization information of the central node. Since the distance between the terminal device and the central node is relatively close, the network device accessed by the terminal device is usually the same as the network device accessed by the central node. Therefore, the terminal device may complete the synchronization with the network device based on the synchronization information of the central node, so that a synchronization operation process of the terminal device may be simplified or calculation complexity of the terminal device may be reduced, thereby saving the power consumption of the terminal device.

In some embodiments, the synchronization information of the central node may include synchronization information for synchronization between the central node and a serving cell, or may include synchronization information for synchronization between the central node and a neighboring cell.

In some embodiments, the synchronization information may include time domain synchronization information and/or frequency domain synchronization information.

In some embodiments, the synchronization information may include uplink synchronization information and/or downlink synchronization information.

The downlink synchronization information may include PCI information of a serving cell of the central node. The terminal device may perform downlink synchronization based on the PCI information of the serving cell of the central node. In this way, the terminal device and the central node may access the same serving cell.

The terminal device may determine the PSS sequence and/or the SSS sequence based on the PCI information of the serving cell. The PSS sequence and/or SSS sequence may be obtained based on equation (1) described above. The terminal device may detect the downlink synchronization signal based on the PSS sequence and/or the SSS sequence.

It is seen from the foregoing description that in a conventional solution, the terminal device needs to traverse all PSS sequences and SSS sequences before determining the PCI of the cell. However, in the embodiments of the present disclosure, the terminal device does not need to traverse all the PSS sequences and SSS sequences, and only needs to detect the determined PSS sequence and/or SSS sequence, which can reduce synchronization sequences for matching, thereby saving power consumption.

In some embodiments, the synchronization information of the central node may also include a PSS sequence and/or an SSS sequence of the serving cell, so that the terminal device may directly obtain the PSS sequence and/or the SSS sequence. In addition, the terminal device may also determine the PCI information of the cell based on the PSS sequence and/or the SSS sequence.

In some other embodiments, the synchronization information of the central node may also include PBCH information of the serving cell. After the central node transmits the PBCH of the serving cell to the terminal device, the terminal device may directly use the PBCH information, thereby saving the time for detecting and decoding the PBCH by the terminal device. The PBCH information may include MIB information and/or physical layer information.

Certainly, in some embodiments, the central node may also transmit PCIs of all cells that can be detected by the central node to the terminal device, to ensure that the terminal device can access a cell with better signal quality. For example, the central node may perform downlink synchronization at each location, i.e., perform downlink synchronization with each cell, obtain the downlink synchronized PCI at each location, and record the information. The central node may transmit the recorded PCI list information to the terminal device, and the terminal device may only detect cells in this list, which can also save power consumption of the terminal device to some extent. Some terminals within the coverage of the central node may directly detect the downlink synchronization sequence transmitted by the central node to obtain the synchronization with the base station, and these terminals may notify the central node of the obtained synchronization information, so that the central node obtains the information about the cells accessed by the terminals within the coverage of the central node.

In order to help the central node determine whether the cell accessed by the terminal device is the same as the cell in which the central node is located, the terminal device may also transmit the PCI of the accessed cell to the central node after completing cell access.

In some embodiments, the synchronization information of the central node may include one or more of

an arrival time at which the downlink synchronization signal arrives at the central node, a transmitting time at which the central node transmits a first signal to the terminal device, a time difference between the arrival time at which the downlink synchronization signal arrives at the central node and the transmitting time at which the central node transmits the first signal to the terminal device, and a transmission delay of a downlink signal transmitted by the network device to the central node.

The downlink synchronization signal may include the SSB. For example, the downlink synchronization signal may include one or more of the PSS, the SSS, the DMRS, and the PBCH.

The terminal device may determine a detection time of the downlink synchronization signal based on the synchronization information of the central node. Further, the terminal device may determine a downlink synchronization time based on the detection time of the downlink synchronization signal. The detection time of the downlink synchronization signal is a detection time estimated by the terminal device. The downlink synchronization time may be understood as a time for the terminal device to perform downlink synchronization. For example, the downlink synchronization time is a time for the terminal device to receive the downlink synchronization signal. The detection time of the downlink synchronization signal may be the same as or different from the downlink synchronization time. Based on the synchronization information of the central node, the terminal device may reduce a time range for downlink search and save a search time of downlink synchronization performed by the terminal device.

For ease of description, the detection time of the downlink synchronization signal determined by the terminal device is referred to as a first time. It should be noted that the first time is a possible downlink signal receiving time estimated by the terminal device.

The downlink synchronization time is not specifically limited in the embodiments of the present disclosure. As an example, the downlink synchronization time is the same as the first time. The terminal device may receive the downlink synchronization signal at the first time to complete downlink synchronization. As another example, the downlink synchronization time is different from the first time. The terminal device may offset the first time to obtain a second time, and then receive the downlink synchronization signal at the second time to complete downlink synchronization. As yet another example, the terminal device may determine a time range based on the first time, and then detect (or search) the downlink synchronization signal within the time range to complete downlink synchronization. A manner of determining the first time is described below with reference to several examples.

The synchronization information of the central node may include one or more of the arrival time (hereinafter denoted as $t_2$) at which the downlink synchronization signal arrives at the central node, the transmitting time (hereinafter denoted as $t_1$) at which the central node transmits the first signal to the terminal device, the time difference (hereinafter denoted as $t_1-t_2$) between the transmitting time at which the central node transmits the first signal to the terminal device and the arrival time at which the downlink synchronization signal arrives at the central node, and the transmission delay (hereinafter denoted as $d_1$) of the downlink synchronization signal transmitted by the network device to the central node.

The $t_2$ may be understood as an arrival time of the downlink synchronization signal estimated by the central node. Since the transmitting time of the downlink synchronization signal is fixed, the central node is able to determine a reception time of the downlink synchronization signal. In some embodiments, the central node may transmit a location of the downlink synchronization signal in WiFi timing to the terminal device, to facilitate detection of the downlink synchronization signal by the terminal device.

A type of the first signal is not specifically limited in the embodiments of the present disclosure. For example, the first signal may be a WiFi beacon signal, or another WiFi signal, such as request to send (CTS), clear to send (RTS), or the like. In some embodiments, the first signal may be a signal that the central node sends the synchronization information to the terminal device, i.e., the first signal carries the first information.

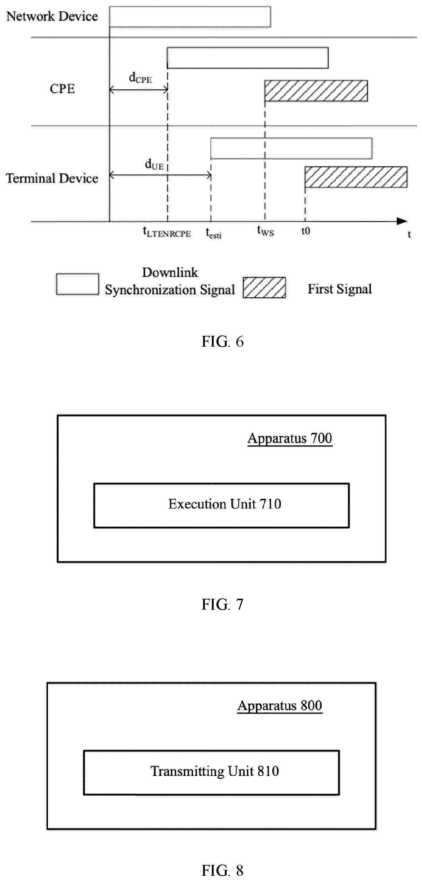

The relationship between the foregoing times is described below with reference to FIG. 6.

It is assumed that the arrival time at which the first signal arrives at the terminal device is t0, the transmission delay of the downlink signal sent by the network device to the terminal device is $d_2$, the transmission delay of the signal sent by the central node to the terminal device is $d_1$, and the time at which the downlink synchronization signal arrives at the terminal device is $t_{esti}$, a corresponding relationship between these times is as follows:

$$t_{esti}=t0-(t_1-t_2)-(d_1-d_2-d_3) \text{ (Equation 2)}$$

A difference obtained by $d_2-d_3$ is denoted as $\Delta d$, and $\Delta d$ may be understood as the time difference between the arrival time at which the downlink synchronization signal arrives at the central node and the arrival time at which the downlink synchronization signal arrives at the terminal device.

A manner of determining $\Delta d$ is not specifically limited in the embodiments of the present disclosure. $\Delta d$ may be determined by the terminal device, or may be determined by the central node. After determining $\Delta d$, the central node may send $\Delta d$ to the terminal device. The manner in which the terminal device determines $\Delta d$ is consistent with the manner in which the central node determines $\Delta d$. The following takes the terminal device determining $\Delta d$ as an example to describe the manner for determining $\Delta d$.

As an example, the terminal device may determine $\Delta d$ based on a maximum value and a minimum value of $\Delta d$. The maximum value of $\Delta d$ is $d_1$, and the minimum value of $\Delta d$ is $-d_1$. Taking FIG.3 as an example, when the terminal device (i.e., the terminal device) is located on a connection line between the central node and the base station, $\Delta d$ is minimized and equals -di. When the terminal device is located on an extension line of a connection line between the central node and the base station, $\Delta d$ is maximized and equals $d_1$. The terminal device may take an average of the maximum and minimum values of $\Delta d$ as $\Delta d$. Of course, the terminal device may also process the maximum and minimum values of $\Delta d$ in other ways to obtain $\Delta d$.

As another example, $\Delta d$ may be equal to $d_1$. When the coverage of the central node is less than (or much less than) the coverage of the base station, or the distance from the terminal device to the central node is less than (or much less than) the distance from the terminal device to the base station, it may be considered that $\Delta d$ is equal to the $d_{wifi}$. In this case, the above equation (2) may be expressed as:

$$t_{esti}=t0-(t_1-t_2) \quad \text{(Equation 3)}$$

Of course, in some embodiments, the above equation (2) may also be deformed as follows:

$$t_{esti}=t0-(t_1-t_2)+\text{adjustment value} \quad \text{(Equation 4)}$$

The adjustment value may be 0, or may not be 0, which is not specifically limited in the embodiments of the present disclosure. The adjustment value may be notified by the network device to the terminal device, or may be notified by the central node to the terminal device. For example, the terminal device may perform downlink time estimation to determine its own TA. The terminal device may send its TA or the offset of downlink synchronization relative to WiFi timing to the central node. The central node may determine the adjustment value based on information sent by the terminal device and transmit the adjustment value to the terminal device. The central node may periodically notify the terminal device to perform uplink synchronization or downlink synchronization.

As an example, when the central node uses a directional antenna, the central node may determine $\Delta d$ according to a location relationship among the coverage area of the central node, the base station, and the central node. For example, it is assumed that a coverage radius of the central node is r and the coverage area of the central node is located on the extension line of the base station and the central node, i.e., the coverage area and the base station are located on opposite sides of the central node, the value of $\Delta d$ may be r/2c. As another example, it is assumed that the coverage radius of the central node is r and the coverage area of the central node is located between the base station and the central node, the value of $\Delta d$ may be $-r/2c$, where c is a transmission speed of the wireless signal.

In some embodiments, the terminal device may determine, based on the second information, whether to omit the downlink synchronization process. The second information includes one or more of a transmission delay of WiFi, reception strength of a downlink signal, reception strength of a WiFi signal, a downlink path loss, and a WiFi path loss. Omitting the downlink synchronization process may be understood as that the terminal device directly receives the downlink synchronization signal at a certain time position, and does not need to perform blind detection on the downlink synchronization signal. For example, the terminal device may receive the downlink synchronization signal at a time position $t_{esti}$, or receive the downlink synchronization signal at a time position obtained from offsetting $t_{esti}$. Not omitting the downlink synchronization process may be understood as that the terminal device determines a time range based on the $t_{esti}$ (e.g., a time range obtained by offsetting the $t_{esti}$ forward and/or backward), and then detects the downlink synchronization signal in the time range.

If a first condition is met, the terminal device may omit the downlink synchronization process. The first condition includes one or more of a transmission delay of WiFi being less than a preset threshold, reception strength of the downlink signal being lower than a preset threshold, reception strength of the WiFi signal being higher than a preset threshold, the downlink path loss being higher than a preset threshold, and the WiFi path loss being lower than a preset threshold.

In some embodiments, the synchronization information of the central node may include the TA of the central node. The terminal device may perform uplink synchronization based on the TA of the central node. Alternatively, the terminal device may determine, based on the TA of the central node, whether the terminal device is out of sync. For example, the terminal device may use the TA of the central node as its own TA and perform uplink synchronization based on the TA. For example, when the distance between the central node and the terminal device is relatively close and the terminal device is farther from the base station, the terminal device may update its TA by using the TA of the central node. For another example, when the distance between the central node and the terminal device is relatively close and the central node and the terminal device move at the same speed, the terminal device may update its TA by using the TA of the central node.

In addition to performing uplink synchronization according to the TA of the central node, the terminal device may further determine the detection time of the downlink synchronization signal based on the TA of the central node. For example, the terminal device may further select, based on the TA of the central node, a suitable strategy for determining the $t_{esti}$, e.g., determining a size of the adjustment value. For example, the terminal device may determine the distance between the central node and the base station based on the TA of the central node. In addition, the terminal device may obtain the distance between the terminal device and the central node based on WiFi parameters, to determine the size of the adjustment value according to the distance between the central node and the base station and the distance between the central node and the terminal device, e.g., to determine whether the adjustment value is 0. For example, when the distance between the central node and the base station is relatively far and the distance between the central node and the terminal device is relatively close, the adjustment value is 0. When the distance between the central node and the base station is almost equal to the distance between the central node and the terminal device, the adjustment value is not 0.

As an example, the terminal device may determine the size of the adjustment value according to a ratio of the distance between the central node and the base station to the distance between the central node and the terminal device. When the ratio is greater than a first preset threshold, the adjustment value is 0. When the ratio is less than or equal to the first preset threshold, the adjustment value is not 0. The first preset threshold may be configured by the network device to the terminal device, or may be determined by the terminal device itself, or may be predefined in the protocol.

As another example, the terminal device may determine the size of the adjustment value based on a difference between the distance between the central node and the base station and the distance between the central node and the terminal device. When the difference is greater than the first preset threshold, the adjustment value is 0. When the difference is less than or equal to the first preset threshold, the adjustment value is not 0. The first preset threshold may be configured by the network device to the terminal device, or may be determined by the terminal device itself, or may be predefined in the protocol.

In some embodiments, the TA of the central node may also be used for locating the terminal device, i.e., the terminal device may determine the location information of the terminal device based on the TA of the central node. The terminal device may determine the distance between the central node and the base station based on the TA of the central node, and then determine the location of the terminal device based on the distance between the central node and the base station. For example, the terminal device may determine the location information of the terminal device based on one or more of the distance between the central node and the base station, the distance between the terminal device and the central node, the location of the base station, and the location of the central node.

Certainly, in some embodiments, the location of the terminal device may be implemented by a location device. The terminal device may transmit one or more of the TA of the central node, the distance between the terminal device and the central node, and the distance between the central node and the base station to the location device. The location device may determine the location of the terminal device based on one or more of the distance between the central node and the base station, the distance between the central node and the terminal device, the location of the base station, and the location of the central node. The location device may be in a core network. Taking an NR system as an example, the location device may be a location management function (LMF). Taking another communication system as an example, the location device may be a location management unit (LMU), a location management center (LMC), or an evolved serving mobile location center (E-SMLC).

In some embodiments, the central node may send the TA of the terminal device to the terminal device, i.e., the first information may include the TA of the terminal device. For example, the network device may transmit the TA of the terminal device to the central node, and then the central node forwards the TA of the terminal device to the terminal device. For example, the terminal device may transmit the preamble to the network device, the network device may transmit the TA of the terminal device to the central node after determining the TA of the terminal device based on the preamble, and the central node forwards the TA to the terminal device. After receiving the TA, the terminal device may perform uplink synchronization based on the TA.

In some embodiments, the first information may include beam information of the central node. The beam information of the central node may be understood as beam information used by the central node. For example, the beam information may indicate which beam the terminal device uses to receive a signal from the base station. For another example, the beam information may indicate which beam the terminal device uses to transmit a signal to the base station. The central node is usually powered by an active power supply, a large volume of the central node supports more antennas, and a spatial resolution is relatively high, so that the scanning performance of the transmit beam and the receive beam of the central node is better than that of the terminal device. In addition, the distance between the central node and the terminal device is generally close, the central node transmits its own beam information to the terminal device, which allows the terminal device to quickly select appropriate transmit and receive beams, avoiding some unnecessary beam scanning and calculation performed by the terminal device, thereby reducing computational complexity and saving power consumption of the terminal device.

The beam information may include one or more of an absolute direction of the beam, a relative direction of the beam, and a sequence number of the beam. The absolute direction of the beam may indicate an angle at which the beam is offset from a reference absolute direction. The reference absolute direction may include, for example, one or more of due north, due south, due west, due east, offset from north at an angle, offset from south at an angle, offset from west at an angle, and offset from east at an angle. For example, the reference absolute direction may be predefined in a protocol or may be signaled to the terminal device by the network device. The relative direction of the beam may refer to a direction in which the beam is offset from a baseline direction. The baseline direction may be, for example, a direction of a beam, or may be a direction relative to a connection line between the network device and the terminal. The baseline direction may be predefined by the protocol or may be signaled to the terminal device by the network device. The sequence number of the beam may be associated with the absolute direction of the beam (or the relative direction of the beam). The association may be predefined by the protocol or signaled to the terminal device by the network device. The beam information of the terminal device may include beam information for one base station or may include beam information for a plurality of base stations. If the beam information of the terminal device includes beam information of the terminal device for the plurality of base stations, the beam information of the terminal device may further indicate a correspondence between the plurality of base stations and the beam information.

In some embodiments, the beam information of the central node may include information of a transmit beam and/or information of a receive beam. In some embodiments, the beam information of the central node may include spatial domain information of the beam and/or time domain information of the beam. The spatial domain information may include a direction of a beam. For example, the spatial domain information of the beam may include one or more of the absolute direction of the beam, the relative direction of the beam, and the sequence number of the beam. The absolute direction of the beam may refer to an angle at which the beam is offset from the reference absolute direction. The reference absolute direction may include, for example, one or more of due north, due south, due west, due east, offset from north at an angle, offset from south at an angle, offset from west at an angle, and offset from east at an angle. The relative direction of the beam may refer to the direction in which the beam is offset from the baseline direction. The baseline direction may be, for example, the direction of the beam, or may be the direction relative to the connection line between the network device and the center node. The sequence number of the beam may be associated with the absolute direction of the beam (or the relative direction of the beam). The association may be predefined by the protocol or signaled to the central node by the network device. The time domain information of the beam may include information of a transmit time and/or receive time of the beam.

The information of the transmit beam may include spatial domain information of the transmit beam. The terminal device may select its own transmit beam based on spatial domain information of a transmit beam of the central node. The spatial domain information of the transmit beam selected by the terminal device is consistent with the spatial domain information of the transmit beam of the central node, or in other words, a transmit direction of the transmit beam selected by the terminal device is consistent with a transmit direction of the transmit beam of the central node (e.g., the transmit beam of the terminal device overlaps with the transmit beam of the central node in space).

The information of the receive beam may include spatial domain information of the receive beam and/or time domain information of the receive beam. The terminal device may select its own receive beam based on spatial domain information of a receive beam of the central node. The spatial domain information of the receive beam selected by the terminal device is consistent with the spatial domain information of the receive beam of the central node, or in other words, a receive direction of the receive beam selected by the terminal device is consistent with a receive direction of the receive beam of the central node (e.g., the receive beam of the terminal device overlaps with the receive beam of the central node in space). The terminal device may receive, on the selected receive beam, a downlink signal transmitted by the network device.

The time domain information of the receive beam may include a receive time of the receive beam. For example, the terminal device may receive the downlink signal transmitted by the network device at the receive time, without receiving the downlink signal at other times, thereby saving power consumption of the terminal device.

The receive beam may be an SSB beam. As described in the foregoing description, the network device transmits SSBs directed to different directions at different times, and a plurality of SSBs in one period form an SSB burst. Only one or part of the SSBs in the SSB burst is directed towards the terminal device. The central node may transmit time domain information and/or spatial domain information of the SSB beam to the terminal device, so that the terminal device may detect the SSB beam at a time domain position indicated by the central node and/or a spatial domain position indicated by the central node, to avoid scanning all the SSBs in the SSB burst.

The time domain information of the SSB may include one or more of an index of the SSB, and time domain information of a start time of the SSB burst relative to WiFi timing. and time domain information in the WiFi timing. The index of the SSB may be understood as a position of the SSB in the SSB burst, i.e., a sequence number of the SSB in the SSB burst. After receiving the time domain information of the SSB, the terminal device may determine the detection time of detecting the SSB.

In some embodiments, the first information may include cell handover information of the central node. The terminal device may perform cell handover based on the cell handover information of the central node. The cell handover information of the central node includes one or more of PCI information of a neighboring cell of the central node, MIB information of a neighboring cell of the central node, frame synchronization information of a neighboring cell of the central node, RRM measurement information of a neighboring cell of the central node, and PBCH information of a neighboring cell of the central node.

The cell handover information of the central node may include PCI information of the neighboring cell. When performing cell handover, the terminal device needs to select a target cell, and the terminal device may use a neighboring cell of the central node as the target cell to complete cell handover after the central node transmits the PCI information of the neighboring cell to the terminal device.

The cell handover information of the central node may include MIB information of the neighboring cell. When performing cell handover, the terminal device needs to decode the PBCH transmitted by the neighboring cell to obtain MIB information in the PBCH. After the central node transmits the MIB information of the neighboring cell to the terminal device, the terminal device may directly obtain the MIB information, so that the time for detecting and decoding the PBCH by the terminal device may be saved.

The cell handover information of the central node may include the frame synchronization information of the neighboring cell. The frame synchronization information may help the terminal device to quickly complete frame synchronization with the neighboring cell, thereby avoiding some complex synchronization operation processes and saving power consumption of the terminal device.

The cell handover information of the central node may include the RRM measurement information of the neighboring cell. When performing cell handover, the terminal device needs to measure RRM of the neighboring cell, so as to select an appropriate neighboring cell. After the central node transmits the RRM measurement information of the neighboring cell to the terminal device, the terminal device may directly use the RRM measurement information without measuring the RRM of the neighboring cell, thereby reducing the measurement operation process and saving the power consumption of the terminal device.

The cell handover information of the central node may include the PBCH information of the neighboring cell. In a process of performing downlink synchronization with a neighboring cell, the terminal device needs to detect and decode a PBCH transmitted by the neighboring cell. After the central node transmits the PBCH information of the neighboring cell to the terminal device, the terminal device may directly use the PBCH information, so that the time for detecting and decoding the PBCH by the terminal device may be saved. The information of the PBCH may include MIB information and/or physical layer information.

The solution in the embodiments of the present disclosure is applicable to a scenario in which the terminal device and the central node belong to the same base station, or the solution in the embodiments of the present disclosure is applicable to a scenario in which the terminal device and the central node access the same cell.

In some embodiments, the terminal device may transmit a request message to the central node, and the request message may carry an ID of a serving cell of the UE (denoted as UE CELL ID). The request message may be used to request to use the solution in the embodiments of the present disclosure, or the request message is used to request the center node to transmit the first information. The following uses an example in which the request message is used to request to use the solution in the embodiments of the present disclosure for description. The central node may determine, based on the UE CELL ID, whether to use the solution in the embodiments of the present disclosure. If the UE CELL ID is the same as an ID (denoted as a central node CELL ID) of the serving cell of the central node, the central node may determine to use the solution in the embodiments of the present disclosure. If the UE CELL ID is different from the CELL ID of the central node, the central node may determine not to use the solution in the embodiments of the present disclosure. Alternatively, if the UE CELL ID belongs to a CELL ID list of the central node, the central node may determine to use the solution in the embodiments of the present disclosure. If the UE CELL ID does not belong to the CELL ID list of the central node, the central node may determine that the solution in the embodiments of the present disclosure is not used. In addition, the central node may further transmit a response message to the terminal device, and the response message is used to indicate whether to use the solution in the embodiments of the present disclosure.

The method embodiments of the present disclosure are described in detail above with reference to FIG. 1 to FIG. 6, and the apparatus embodiments of the present disclosure are described in detail below with reference to FIG. 7 to FIG. 9. It should be understood that descriptions of the method embodiments correspond to descriptions of the apparatus embodiments, and therefore, reference may be made to the foregoing method embodiments for parts that are not described in detail.

FIG. 7 is a schematic structural diagram of an apparatus for wireless communication according to an embodiment of the present disclosure. The apparatus may be a terminal device. The terminal device shown in FIG. 7 may be any terminal device described above. The terminal device 700 includes an execution unit 710.

The execution unit 710 is configured to execute a first operation based on first information from a central node, and if the first operation includes determining a location of the terminal device. If the first operation includes determining a location of the terminal device, the first information includes information for determining a location of the central node. If the first operation includes communicating with a network device, the first information includes one or more of synchronization information for synchronization between the central node and the network device, location information of the central node, beam information of the central node, and cell handover information of the central node.

In some embodiments, the central node includes one or more of a customer premise equipment (CPE), a wireless fidelity (WiFi) base station, a road side unit in a sidelink communication system, and a central node in a sidelink communication system.

In some embodiments, the central node includes the WiFi base station, and the WiFi base station has a capability of performing downlink synchronization and/or uplink synchronization with the network device.

In some embodiments, the synchronization information includes physical cell identity (PCI) information of a serving cell of the central node.

In some embodiments, the execution unit 710 is configured to determine a primary synchronization signal (PSS) sequence and/or a secondary synchronization signal (SSS) sequence based on the PCI information of the serving cell, and to detect a downlink synchronization signal based on the PSS sequence and/or the SSS sequence.

In some embodiments, the synchronization information includes one or more of an arrival time at which a downlink synchronization signal arrives at the central node, a transmitting time at which the central node transmits a first signal to the terminal device, a time difference between the transmitting time at which the central node transmits the first signal to the terminal device and the arrival time at which the downlink synchronization signal arrives at the central node, and a transmission delay of a downlink signal transmitted by the network device to the central node.

In some embodiments, the execution unit 710 is configured to determine a detection time of the downlink synchronization signal based on the synchronization information and a reception time of the first signal, and to determine a downlink synchronization time based on the detection time.

In some embodiments, the detection time $t_{esti}$ is determined based on the following formula: $t_{esti}=t0-(t_1-t_2)-(d_1-d_2-d_3)$, where t0 is an arrival time at which the first signal arrives at the terminal device, $t_1$ is the transmitting time at which the central node transmits the first signal to the terminal device, $t_2$ is the arrival time at which the downlink synchronization signal arrives at the central node, $d_1$ is a transmission delay of the first signal transmitted by the central node to the terminal device, $d_2$ is a transmission delay of a signal transmitted by the central node to the terminal device, and $d_3$ is the transmission delay of the downlink synchronization signal transmitted by the network device to the central node.

In some embodiments, the $d_2$-$d_3$ is determined by the terminal device or notified by the central node to the terminal device.

In some embodiments, the synchronization information includes a timing advance (TA) of the central node.

In some embodiments, the execution unit 710 is configured to perform uplink synchronization with the network device based on the TA of the central node.

In some embodiments, the execution unit 710 is configured to determine a location of the terminal device based on the TA of the central node.

In some embodiments, the beam information of the central node includes one or more of spatial domain information of a receive beam, time domain information of the receive beam, and spatial domain information of a transmit beam.

In some embodiments, the receive beam includes a synchronization signal block (SSB) beam.

In some embodiments, the execution unit 710 is configured to detect a downlink synchronization signal based on the spatial domain information of the SSB beam and/or the time domain information of the SSB beam.

In some embodiments, the time domain information of the SSB beam includes an index of an SSB.

In some embodiments, the cell handover information of the central node includes one or more of master information block (MIB) information of a neighboring cell of the central node, frame synchronization information of the neighboring cell of the central node, radio resource management (RRM) measurement information of the neighboring cell of the central node, and physical broadcast channel (PBCH) information of the neighboring cell of the central node.

In some embodiments, the execution unit 710 is configured to perform cell handover based on the first information.

FIG. 8 is a schematic structural diagram of an apparatus for wireless communication according to an embodiment of the present disclosure. The apparatus may be a central node. The apparatus shown in FIG. 8 may be any central node described above. For example, the central node may be a CPE, a WiFi base station, a road side unit in a sidelink communication system, a central node in a sidelink communication system, and the like described above. The apparatus 800 may include a transmitting unit 810.

The transmitting unit 810 is configured to transmit first information to a terminal device to enable the terminal device to execute a first operation. If the first operation includes determining a location of the terminal device, the first information includes information for determining a location of the central node. If the first operation includes communicating with a network device, the first information includes one or more of synchronization information for synchronization between the central node and the network device, location information of the central node, beam information of the central node, and cell handover information of the central node.

In some embodiments, the central node includes one or more of a customer premise equipment (CPE), a wireless fidelity (WiFi) base station, a road side unit in a sidelink communication system, and a central node in a sidelink communication system.

In some embodiments, the central node includes the WiFi base station, and the WiFi base station has a capability of performing downlink synchronization and/or uplink synchronization with the network device.

In some embodiments, the synchronization information includes one or more of physical cell identity (PCI) information of a serving cell of the central node, an arrival time at which a downlink synchronization signal arrives at the central node, a transmitting time at which the central node transmits a first signal to the terminal device, a time difference between the transmitting time at which at which the central node transmits the first signal to the terminal device and the arrival time at which the downlink synchronization signal arrives at the central node, a transmission delay of a downlink signal transmitted by the network device to the central node, and a time advance (TA) of the central node.

In some embodiments, the beam information of the central node includes one or more of spatial domain information of a receive beam, time domain information of the receive beam, and spatial domain information of a transmit beam.

In some embodiments, the receive beam includes a synchronization signal block (SSB) beam.

In some embodiments, the time domain information of the SSB beam includes an index of the SSB.

In some embodiments, the cell handover information of the central node includes one or more of master information block (MIB) information of a neighboring cell of the central node, frame synchronization information of the neighboring cell of the central node, radio resource management (RRM) measurement information of the neighboring cell of the central node, and physical broadcast channel (PBCH) information of the neighboring cell of the central node.

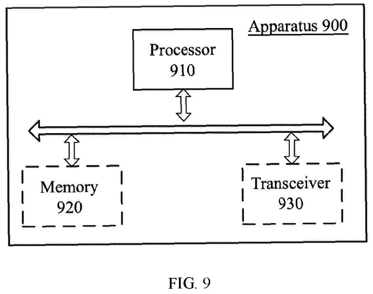

FIG. 9 is a schematic structural diagram of an apparatus according to an embodiment of the present disclosure. The dashed line in FIG. 9 indicates that the unit or module is optional. The apparatus 900 may be configured to implement the method described in the foregoing method embodiments. The apparatus 900 may be one or more of a chip, a terminal device, and a CPE.

The apparatus 900 may include one or more processors 910, and the processor 910 may support the apparatus 900 to implement the method described in the foregoing method embodiments. The processor 910 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 900 may further include one or more memories 920 storing a program, and the program may be executed by the processor 910 to cause the processor 910 to perform the method described in the foregoing method embodiments. The memory 920 may be independent of the processor 910 or may be integrated into the processor 910.

The apparatus 900 may further include a transceiver 930, and the processor 910 may communicate with another device or chip via the transceiver 930. For example, the processor 910 may perform data transceiving with another device or chip via the transceiver 930.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that, in the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

It should be understood that the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for wireless communication, comprising: a terminal device executing a first operation based on first information from a central node, wherein:

   the first information includes information for determining a location of the central node if the first operation includes determining a location of the terminal device; and
   the first information includes one or more of synchronization information for synchronization between the central node and the network device, location information of the central node, beam information of the central node, and cell handover information of the central node if the first operation includes communicating with a network device.

2. The method according to claim 1, wherein the central node includes one or more of a customer premise equipment, CPE, a wireless fidelity, WiFi, base station, a road side unit in a sidelink communication system, and a central node in the sidelink communication system.

3. The method according to claim 2, wherein the central node includes the WiFi base station, and the WiFi base station has a capability of performing downlink synchronization and/or uplink synchronization with the network device.

4. The method according to any one of claims 1 to 3, wherein the synchronization information includes physical cell identity, PCI, information of a serving cell of the central node.

5. The method according to claim 4, wherein the terminal device executing the first operation based on the first information of the central node includes:

   the terminal device determining a primary synchronization signal, PSS, sequence and/or a secondary synchronization signal, SSS, sequence based on the PCI information of the serving cell; and
   the terminal device detecting a downlink synchronization signal based on the PSS sequence and/or the SSS sequence.

6.  The method according to any one of claims 1 to 3, wherein the synchronization information includes one or more of:

    an arrival time at which a downlink synchronization signal arrives at the central node;
    a transmitting time at which the central node transmits a first signal to the terminal device;
    a time difference between the transmitting time at which the central node transmits the first signal to the terminal device and the arrival time at which the downlink synchronization signal arrives at the central node; and
    a transmission delay of a downlink signal transmitted by the network device to the central node.

7.  The method according to claim 6, wherein the terminal device executing the first operation based on the first information from the central node includes:

    the terminal device determining a detection time of the downlink synchronization signal based on the synchronization information and a reception time of the first signal; and
    the terminal device determining a downlink synchronization time based on the detection time.

8.  The method according to claim 7, wherein the detection time $t_{esti}$ is determined based on the following formula:

    $$t_{esti}=t0-(t_1-t_2)-(d_1-d_2-d_3),$$

    wherein:

    t0 is an arrival time at which the first signal arrives at the terminal device;
    $t_1$ is the transmitting time at which the central node transmits the first signal to the terminal device;
    $t_2$ is the arrival time at which the downlink synchronization signal arrives at the central node;
    $d_1$ is a transmission delay of the first signal transmitted by the central node to the terminal device;
    $d_2$ is a transmission delay of a signal transmitted by the central node to the terminal device; and
    $d_3$ is the transmission delay of the downlink synchronization signal transmitted by the network device to the central node.

9.  The method according to claim 8, wherein the $d_2$-$d_3$ is determined by the terminal device or notified by the central node to the terminal device.

10. The method according to any one of claims 1 to 3, wherein the synchronization information includes a time advance, TA, of the central node.

11. The method according to claim 10, wherein the terminal device executing the first operation based on the first information from the central node includes:
    the terminal device performing uplink synchronization with the network device based on the TA of the central node.

12. The method according to claim 11, wherein the terminal device executing the first operation based on the first information from the central node includes:
    the terminal device determining a location of the terminal device based on the TA of the central node.

13. The method according to any one of claims 1 to 3, wherein the beam information of the central node includes one or more of:

    spatial domain information of a receive beam;
    time domain information of the receive beam; and
    spatial domain information of a transmit beam.

14. The method according to claim 13, wherein the receive beam includes a receive synchronization signal block, SSB, beam.

15. The method according to claim 14, wherein the terminal device executing the first operation based on the first information from the central node includes:
    the terminal device detecting a downlink synchronization signal based on the spatial domain information of the SSB beam and/or the time domain information of the SSB beam.

16. The method according to claim 15, wherein the time domain information of the SSB beam includes an index of an SSB.

17. The method according to any one of claims 1 to 3, wherein the cell handover information of the central node includes one or more of:

    master information block, MIB, information of a neighboring cell of the central node;
    frame synchronization information of the neighboring cell of the central node;
    radio resource management, RRM, measurement information of the neighboring cell of the central node; and
    physical broadcast channel, PBCH, information of the neighboring cell of the central node.

**18.** The method according to claim 17, wherein the terminal device executing the first operation based on the first information from the central node includes:

the terminal device performing cell handover based on the first information.

**19.** A method for wireless communication, comprising:
a central node transmitting first information to a terminal device to enable the terminal device to execute a first operation, wherein:

the first information includes information for determining a location of the central node if the first operation includes determining a location of the terminal device; and
the first information includes one or more of synchronization information for synchronization between the central node and a network device, location information of the central node, beam information of the central node, and cell handover information of the central node if the first operation includes communicating with the network device.

**20.** The method according to claim 19, wherein the central node includes one or more of a customer premise equipment, CPE, a wireless fidelity, WiFi, base station, a road side unit in a sidelink communication system, and a central node in the sidelink communication system.

**21.** The method according to claim 20, wherein the central node includes the WiFi base station, and the WiFi base station has a capability of performing downlink synchronization and/or uplink synchronization with the network device.

**22.** The method according to any one of claims 19 to 21, wherein the synchronization information includes one or more of:

physical cell identity, PCI, information of a serving cell of the central node;
an arrival time at which a downlink synchronization signal arrives at the central node;
a transmitting time at which the central node transmits a first signal to the terminal device;
a time difference between the transmitting time at which at which the central node transmits the first signal to the terminal device and the arrival time at which the downlink synchronization signal arrives at the central node;
a transmission delay of a downlink signal transmitted by the network device to the central node;
a transmission delay of a downlink signal transmitted by the network device to the central node; and

a time advance, TA, of the central node.

**23.** The method according to any one of claims 19 to 22, wherein the beam information of the central node includes one or more of:

spatial domain information of a receive beam;
time domain information of the receive beam; and
spatial domain information of a transmit beam.

**24.** The method according to claim 23, wherein the receive beam includes a receive synchronization signal block, SSB, beam.

**25.** The method according to claim 24, wherein the time domain information of the SSB beam includes an index of an SSB.

**26.** The method according to any one of claims 19 to 25, wherein the cell handover information of the central node includes one or more of:

master information block, MIB, information of a neighboring cell of the central node;
frame synchronization information of the neighboring cell of the central node;
radio resource management, RRM, measurement information of the neighboring cell of the central node; and
physical broadcast channel, PBCH, information of the neighboring cell of the central node.

**27.** An apparatus for wireless communication, wherein the apparatus is a terminal device and comprises:
an execution unit configured to execute a first operation based on the first information from a central node, wherein:

the first information includes information for determining a location of the central node if the first operation includes determining a location of the terminal device; and
the first information includes one or more of synchronization information for synchronization between the central node and a network device, location information of the central node, beam information of the central node, and cell handover information of the central node if the first operation includes communicating with the network device.

**28.** The apparatus according to claim 27, wherein the central node includes one or more of a customer premise equipment, CPE, a wireless fidelity, WiFi, base station, a road side unit in a sidelink communication system, and a central node in the sidelink communication system.

**29.** The apparatus according to claim 28, wherein the central node includes the WiFi base station, and the WiFi base station has a capability of performing downlink synchronization and/or uplink synchronization with the network device.

**30.** The apparatus according to any one of claims 27 to 29, wherein the synchronization information includes physical cell identity, PCI, information of a serving cell of the central node.

**31.** The apparatus according to claim 30, wherein the execution unit is configured to:

determine a primary synchronization signal, PSS, sequence and/or a secondary synchronization signal, SSS, sequence based on the PCI information of the serving cell; and
detect a downlink synchronization signal based on the PSS sequence and/or the SSS sequence.

**32.** The apparatus according to any one of claims 27 to 29, wherein the synchronization information includes one or more of:

an arrival time at which a downlink synchronization signal arrives at the central node;
a transmitting time at which the central node transmits a first signal to the terminal device;
a time difference between the transmitting time at which the central node transmits the first signal to the terminal device and the arrival time at which the downlink synchronization signal arrives at the central node; and
a transmission delay of a downlink signal transmitted by the network device to the central node.

**33.** The apparatus according to claim 32, wherein the execution unit is configured to:

determine a detection time of the downlink synchronization signal based on the synchronization information and a reception time of the first signal; and
determine a downlink synchronization time based on the detection time.

**34.** The apparatus according to claim 33, wherein the detection time $t_{esti}$ is determined based on the following formula:

$$t_{esti}=t0-(t_1-t_2)-(d_1-d_2-d_3),$$

wherein:

t0 is an arrival time at which the first signal arrives at the terminal device;
$t_1$ is the transmitting time at which the central node transmits the first signal to the terminal device;
$t_2$ is the arrival time at which the downlink synchronization signal arrives at the central node;
$d_1$ is a transmission delay of the first signal transmitted by the central node to the terminal device;
$d_2$ is a transmission delay of a signal transmitted by the central node to the terminal device; and
$d_3$ is the transmission delay of the downlink synchronization signal transmitted by the network device to the central node.

**35.** The apparatus according to claim 34, wherein the $d_2$-$d_3$ is determined by the terminal device or notified by the central node to the terminal device.

**36.** The apparatus according to any one of claims 27 to 29, wherein the synchronization information includes a timing advance, TA, of the central node.

**37.** The apparatus according to claim 36, wherein the execution unit is configured to:
perform uplink synchronization with the network device based on the TA of the central node.

**38.** The apparatus according to claim 36, wherein the execution unit is configured to:
determine a location of the terminal device based on the TA of the central node.

**39.** The apparatus according to any one of claims 27 to 29, wherein the beam information of the central node includes one or more of:

spatial domain information of a receive beam;
time domain information of the receive beam; and
spatial domain information of a transmit beam.

**40.** The apparatus according to claim 39, wherein the receive beam includes a synchronization signal block, SSB, beam.

**41.** The apparatus according to claim 40, wherein the execution unit is configured to:
detect a downlink synchronization signal based on the spatial domain information of the SSB beam and/or the time domain information of the SSB beam.

**42.** The apparatus according to claim 41, wherein the time domain information of the SSB beam includes an index of an SSB.

**43.** The apparatus according to any one of claims 27 to 29, wherein the cell handover information of the central node includes one or more of:

> master information block, MIB, information of a neighboring cell of the central node;
> frame synchronization information of the neighboring cell of the central node;
> radio resource management, RRM, measurement information of the neighboring cell of the central node; and
> physical broadcast channel, PBCH, information of the neighboring cell of the central node.

44. The apparatus according to claim 43, wherein the execution unit is configured to:
perform cell handover based on the first information.

45. An apparatus for wireless communication, wherein the apparatus is a central node and comprises:
a transmitting unit configured to transmit first information to a terminal device to enable the terminal device to execute a first operation, wherein:

> the first information includes information for determining a location of the central node if the first operation includes determining a location of the terminal device; and
> the first information includes one or more of synchronization information for synchronization between the central node and a network device, location information of the central node, beam information of the central node, and cell handover information of the central node if the first operation includes communicating with the network device.

46. The apparatus according to claim 45, wherein the central node includes one or more of a customer premise equipment, CPE, a wireless fidelity, WiFi, base station, a road side unit in a sidelink communication system, and a central node in the sidelink communication system.

47. The apparatus according to claim 46, wherein the central node includes the WiFi base station, and the WiFi base station has a capability of performing downlink synchronization and/or uplink synchronization with the network device.

48. The apparatus according to any one of claims 45 to 47, wherein the synchronization information includes one or more of:

> physical cell identity, PCI, information of a serving cell of the central node;
> an arrival time at which a downlink synchronization signal arrives at the central node;
> a transmitting time at which the central node transmits a first signal to the terminal device;

a time difference between the transmitting time at which at which the central node transmits the first signal to the terminal device and the arrival time at which the downlink synchronization signal arrives at the central node;
a transmission delay of a downlink signal transmitted by the network device to the central node;
a transmission delay of a downlink signal transmitted by the network device to the central node; and
a time advance, TA, of the central node.

49. The apparatus according to any one of claims 45 to 48, wherein the beam information of the central node includes one or more of:

> spatial domain information of a receive beam;
> time domain information of the receive beam; and
> spatial domain information of a transmit beam.

50. The apparatus according to claim 49, wherein the receive beam includes a synchronization signal block, SSB, beam.

51. The apparatus according to claim 50, wherein the time domain information of the SSB beam includes an index of an SSB.

52. The apparatus according to any one of claims 45 to 51, wherein
the cell handover information of the central node includes one or more of:

> master information block, MIB, information of a neighboring cell of the central node;
> frame synchronization information of the neighboring cell of the central node;
> radio resource management, RRM, measurement information of the neighboring cell of the central node; and
> physical broadcast channel, PBCH, information of the neighboring cell of the central node.

53. An apparatus for wireless communication comprising a memory and a processor, wherein the memory is configured to store a program and the processor is configured to invoke the program from the memory to cause the terminal device to perform the method according to any one of claims 1 to 18.

54. A network device comprising a memory and a processor, wherein the memory is configured to store a program and the processor is configured to invoke the program from the memory to cause the network device to perform the method according to any one of claims 19 to 26.

**55.** An apparatus comprising a processor configured to invoke a program from a memory to cause the apparatus to perform the method according to any one of claims 1 to 18.

**56.** An apparatus comprising a processor configured to invoke a program from a memory to cause the apparatus to perform the method according to any one of claims 19 to 26.

100

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/CN2022/100883** |

### A.    CLASSIFICATION OF SUBJECT MATTER

H04L 27/00(2006.01)i

According to International Patent Classification (IPC) or to both national classification and IPC

### B.    FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 中心节点, 路侧, 侧链, 功耗, 功率, 节能, 同步, 定位, 位置, 切换, center, node, RSU, road side unit, power, sync, position, location, handover

### C.    DOCUMENTS CONSIDERED TO BE RELEVANT

| Category* | Citation of document, with indication, where appropriate, of the relevant passages | Relevant to claim No. |
|---|---|---|
| Y | WO 2021102859 A1 (HUAWEI TECHNOLOGIES CO., LTD.) 03 June 2021 (2021-06-03) description, page 6 line 1-page 26 last line | 1-5, 10-31, 36-56 |
| Y | CN 109856591 A (TENCENT TECHNOLOGY (SHENZHEN) CO., LTD.) 07 June 2019 (2019-06-07) description, paragraphs [0036]-[0131] | 1-5, 10-31, 36-56 |
| A | CN 114553269 A (HUAWEI TECHNOLOGIES CO., LTD.) 27 May 2022 (2022-05-27) entire document | 1-56 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2023** | **10 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/100883**

| Patent document cited in search report | | | Publication date (day/month/year) | Patent family member(s) | Publication date (day/month/year) |
|---|---|---|---|---|---|
| WO | 2021102859 | A1 | 03 June 2021 | None | |
| CN | 109856591 | A | 07 June 2019 | None | |
| CN | 114553269 | A | 27 May 2022 | None | |

Form PCT/ISA/210 (patent family annex) (July 2022)